Europäisches Patentamt

European Patent Office

Office européen des brevets

(11) Publication number: **0 170 264**
**A2**

## (12) EUROPEAN PATENT APPLICATION

(21) Application number: **85109588.5**

(22) Date of filing: **30.07.85**

(51) Int. Cl.⁴: **B 60 R 13/02**

(30) Priority: **30.07.84 US 635643**

(43) Date of publication of application:
**05.02.86 Bulletin 86/6**

(84) Designated Contracting States:
**DE FR**

(71) Applicant: **Voplex Corporation**
**1100 Pittsford-Victor Road**
**Pittsford New York 14534(US)**

(72) Inventor: **Gonas, Albert J.**
**819 Lakeland**
**Grosse Pointe Michigan 48230(US)**

(74) Representative: **Spott, Gottfried, Dr. et al,**
**Patentanwälte Spott und Puschmann**
**Sendlinger-Tor-Platz 11**
**D-8000 München 2(DE)**

(54) **Retainer for molded panel.**

(57) A retainer for a molded panel has a base 10 with a flat region 15 and projections 13 extending into the material of the molded panel to retain base 10 securely in place. Edge regions 12, extending away from the panel surface, interlock with a cap 11 located to straddle base 10 and have a central region 20 spaced from base 10 to receive and hold a fastener securing the cap, retainer, and panel in place. Interchangeable caps 11, made in varying heights to span varying distances between a panel and its anchorage, can be mounted on universal base 10.

*FIG. 1*

EP 0 170 264 A2

## TITLE

RETAINER FOR MOLDED PANEL

## BACKGROUND

Panel retainers are used in large quantities to secure automotive door panels in place. The retainers have bases attached to the insides of the door panels and caps that extend above the bases to hold fasteners securing the panels to the sheet metal structure of the door. Extenders can be connected between the retainer caps and the fasteners for bridging varying spaces between the panel and the door.

The bases of such panel retainers can have barbs formed in a variety of shapes that can be pressed into a molded panel to hold the retainer in place with the caps spaced from the panel to receive a fastener. Pressed-in barbs are weaker than desirable, however, for panels molded of cellulose fiber and resin materials.

Retainers can also be molded into position on panels as they are formed, but this requires that the base region of the retainer be able to contain the material being molded under pressure to form the panel. It also requires that the base extend under the cap so that the molded material is not pressed against the underside of the cap, precluding attachment of a fastener to the cap. Superposing a cap over a continuous base has the disadvantage of extra material and manufacturing expense, however.

Another problem inadequately solved by prior art panel retainers for automotive doors is ways of bridging the varying distances between a panel and the sheet metal to which it is secured. Varying length "Christmas tree" fasteners and extensions for Christmas tree fasteners have been used for this, but these variations require costly tooling, again adding to the expense.

I have discovered a more versatile and reliable panel retainer that can be made at a lost cost. It better serves the needs of the automotive industry for door panel retainers, and it can also be used for retaining panels in place for other purposes or for retaining in place other molded items having various shapes intended to be encompassed within the term "panel". My panel retainer can be either pressed into a premolded object or molded in place as an object or panel is formed. It also accommodates different height caps for bridging different distances to an anchorage.

SUMMARY OF THE INVENTION

My panel retainer has a plane base with projections disposed for retaining the base securely on the surface of a panel. A plurality of interchangeable caps varying in height are arranged to interlock with base edge regions that extend away from the panel surface. The caps and the edge regions are formed to locate a mounted cap in a position straddling the base so that a central region of the cap positioned over the base can receive and hold a fastener securing the cap, retainer, and panel in place. Different heights of interchangeable caps can span different distances between the panel and its anchorages.

DRAWINGS

Figure 1 is an exploded perspective view of a preferred embodiment of my retainer; and

Figure 2 is an end elevational view of the retainer of FIG. 1.

## DETAILED DESCRIPTION

My retainer uses a universal base 10 and variable height caps 11 that can interlock with base 10 to support Christmas tree or other fasteners anchoring the panel in place. Base 10 is shaped so it can be either molded or pressed into the material forming a panel, where it can connect to caps 11 of whatever heights are required.

Base 10 is preferably formed of sheet metal with rolled edges 12 that are turned inward along opposite sides of base 10. A central region 15 of base 10 between rolled edges 12 is generally flat and sufficiently continuous to contain at a panel surface material compressed against base 10 as the panel is molded.

Barbs 13, formable in many different shapes, extend below the underside of base 10 in an array that interlocks the plane central region 15 securely with the panel material, which can include cellulose fiber and resin material. Openings 14 within each circular array of barbs 13 are small enough to contain the material of a panel being molded so that plane region 15 can lie on the panel surface with barbs 13 extending into the panel and interlocking base 10 with the molded panel material. Barbs 13 can also be formed to penetrate and attach to molded panel material, allowing base 10 to be pressed into a retained position on the surface of a previously molded panel.

Cap 11 is generally U-shaped as illustrated and can be formed of sheet metal or resin. Its lower edges 16 interlock under rolled edges 12, which have central tabs 18 that are bent inward from edges 12 to form notches axially locating edges 16 relative to base 10. Edges 16 squeeze together as cap 11 is snap fit into notches formed by tabs 18 in rolled edges 12. This locates cap 11 longitudinally of base 10 and traps its edges 16 under base edges 12 for a secure and permanent interlock between cap 11 and base 10.

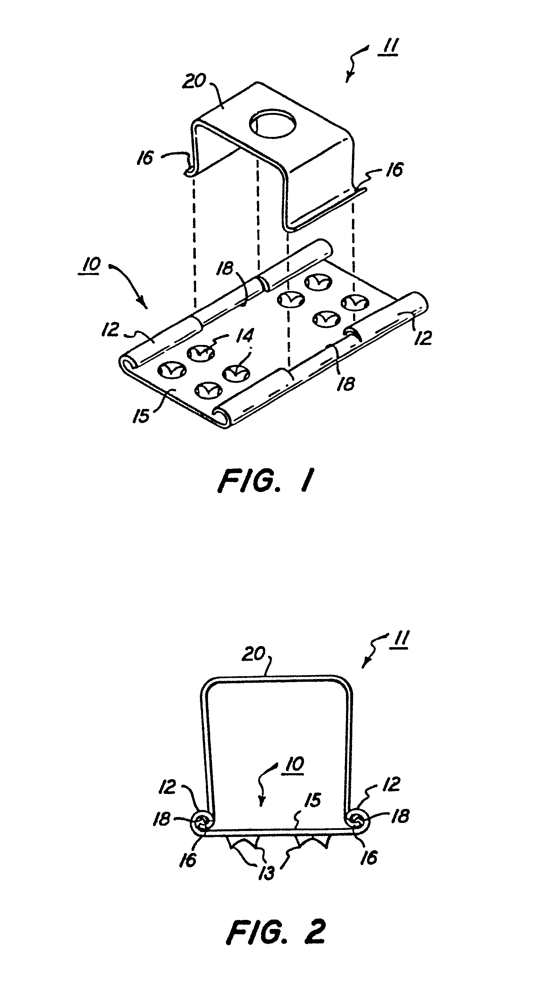

A central upper region 20 of cap 11 stands over base 10 to hold a fastener such as a Christmas tree fastener securing cap 11, base 10, and the attached panel in place. A relatively short cap 11 of FIG. 1 disposes central region 20 a short distance above base 10, and a taller cap 11 as shown in FIG. 2 disposes central region 20 farther above base 10.

Universal base 10 reduces tooling cost to a minimum, because bases are simple to attach to panels without regard for the height of the caps they will bear. Moreover, caps 11 are simple and easy to make in varying heights. They eliminate extender problems and bridge any desired gap between the panel and the fastener anchorage.

- 5 -                    **0170264**

I claim:

1. A retainer for a molded panel, said retainer comprising:

    a. a base having a plurality of projections disposed to retain said base securely on a surface of a panel;

    b. edge regions of said base extending away from said panel surface;

    c. a plurality of interchangeable caps arranged to interlock with said edge regions of said base;

    d. said caps and said edge regions being formed to mount one of said caps between opposite edge regions of said base in a position straddling said base;

    e. a central region of said mounted cap positioned over said base being formed to receive and hold a fastener securing said cap, said retainer, and said panel in place; and

    f. said interchangeable caps varying in height to position said central regions away from said base by varying and preselected distances.

2. The retainer of claim 1 wherein said base has a plane region sufficiently continuous to contain at a panel surface material compressed against said base to form said panel as said panel is molded with said projections extending from said plane region of said base into said material of said molded panel.

3. The retainer of claim 1 wherein said edge regions of said base are rolled inward to confront each other across said base.

4. The retainer of claim 3 wherein said caps have a snap fit interlock with said rolled edges of said base.

5. The retainer of claim 4 wherein said rolled edges have a central discontinuity for locating said mounted cap to straddle a mid-region of said base.

6. The retainer of claim 5 wherein said base has a plane region sufficiently continuous to contain at a panel surface material compressed against said base to form said panel as said panel is molded with said projections extending from said plane region of said base into said material of said molded panel.

FIG. 1

FIG. 2